Europäisches Patentamt

European Patent Office

Office européen des brevets

(11) Veröffentlichungsnummer: **0 300 338**
**A2**

(12) **EUROPÄISCHE PATENTANMELDUNG**

(21) Anmeldenummer: **88111173.6**

(51) Int. Cl.⁴: **B62D 1/10**

(22) Anmeldetag: **13.07.88**

(30) Priorität: **24.07.87 DE 3724560**

(43) Veröffentlichungstag der Anmeldung:
**25.01.89 Patentblatt 89/04**

(84) Benannte Vertragsstaaten:
**DE FR GB IT**

(71) Anmelder: **AUDI AG**
**Postfach 220**
**D-8070 Ingolstadt(DE)**

(72) Erfinder: **Leitermann, Wulf, Dipl.-Ing.**
**Kirschenweg 9**
**D-7107 Bad Wimpfen(DE)**

(74) Vertreter: **Speidel, Eberhardt**
**Postfach 1320 Waldpromenade 26**
**D-8035 Gauting(DE)**

(54) **Anordnung zur Befestigung einer Lenkradnabe an einer Lenksäule.**

(57) Zur lagerichtigen Anbringung der Nabe 6 eines
Lenkrades auf dem Endabschnitt 2 einer Lenksäule
1 ist zwischen diesen Teilen eine Hülse 13 mit einer
Innenverzahnung 14 und einer Außenverzahnung 15
angeordnet, die einerseits mit einer Außenverzahnung 3 auf dem Endabschnitt 2 der Lenksäule 1 und
andererseits mit einer Innenverzahnung 9 der Lenkradnabe 6 formschlüssig zusammenwirken. Die Anzahl der Zähne der Verzahnung 3, 14 zwischen der
Hülse 13 und dem Lenksäulen-Endabschnitt 2
weicht von der Anzahl der Zähne der Verzahnung 9,
15, zwischen der Hülse 13 und der Nabe 6 vorzugsweise um wenige Zähne ab, wodurch eine Feineinstellung des Lenkrades relativ zur Lenksäule 1 ermöglicht ist.

FIG. 2

EP 0 300 338 A2

## Anordnung zur Befestigung einer Lenkradnabe an einer Lenksäule

Die Erfindung bezieht sich auf eine Anordnung zur Befestigung der Nabe eines Lenkrades auf den Endabschnitt einer Lenksäule entsprechend der DE-OS 34 00 609.

Die bekannte Anordnung hat den Zweck, eine exakte Ausrichtung des Lenkrades relativ zur Lenksäule zu erreichen, um zu gewährleisten, daß sich bei nicht eingeschlagenen Rädern die Speichen des Lenkrades in einer ganz bestimmten Lage befinden und dadurch dem Fahrer anzeigen, daß die Räder in der Stellung für Geradeausfahrt sind. Diese exakte Ausrichtung wird bei der bekannten Anordnung dadurch erreicht, daß zwischen der Lenkradnabe und der Lenksäule eine kraftschlüssige Verbindung und zwischen der Lenkradnabe und der Hülse, die durch die Längsverzahnung formschlüssig mit der Lenksäule verbunden ist, eine formschlüssige Verbindung mit Spiel in Umfangsrichtung vorgesehen ist. Durch dieses Spiel läßt sich das Lenkrad exakt auf die Lenksäule aufsetzen. Durch Festziehen der Mutter wird dann die kraftschlüssige Verbindung zwischen Lenkrad und Lenksäule hergestellt. Ist das von dem Fahrer auf das Lenkrad ausgeübte Drehmoment so groß, daß die kraftschlüssige Verbindung zwischen Lenkradnabe und Lenksäule überwunden wird, so findet nach Überwinden des genannten Spiels ein formschlüssiger Kontakt zwischen der Lenkradnabe und der Hülse statt. Dann allerdings steht das Lenkrad nicht mehr in der gewünschten Position, so daß die Lage der Speichen dem Fahrer nicht mehr anzeigt, ob die Räder in der Stellung für Geradeausfahrt sind, was insbesondere beim Anfahren unangenehm ist.

Der Erfindung liegt die Aufgabe zugrunde, eine Lenkradbefestigung gemäß dem Oberbegriff des Anspruchs 1 zu schaffen, die ausschließlich formschlüssig ist und trotzdem eine exakte Ausrichtung des Lenkrades relativ zur Lenksäule zuläßt.

Diese Aufgabe wird erfindungsgemäß durch die im Kennzeichen des Anspruchs 1 angegebenen Merkmale gelöst.

Bei dem erfindungsgemäßen Vorschlag wird durch die Längsverzahnung sowohl zwischen der Lenkradnabe und der Hülse als auch zwischen der Hülse und der Lenksäule eine absolut formschlüssige Verbindung zwischen der Lenkradnabe und Lenksäule geschaffen. Durch die unterschiedliche Zähnezahl der beiden Längsverzahnungen läßt sich nun das Lenkrad exakt in der richtigen Position auf die Lenksäule aufsetzen, wobei die Genauigkeit um so größer ist, je geringer der Unterschied zwischen der Anzahl der Zähne der beiden Längsverzahnungen ist. Bei einem Unterschied von nur einem Zahn ist die Genauigkeit der Einstellung am größten.

Um nach dem Aufsetzen und Ausrichten des Lenkrades relativ zur Lenksäule das Einsetzen der Hülse zwischen der Lenkradnabe und der Lenksäule zu erleichtern, ist die Lenksäule am Übergang zu dem Endabschnitt mit dem Längsprofil mit einer zylindrischen Zentrierfläche für die Nabe versehen. Dadurch wird gewährleistet, daß ein gleichmäßiger Ringspalt zwischen dem Endabschnitt der Lenksäule und dem Innenumfang der Nabe vorhanden ist, in den die Hülse unter gleichzeitigem Eingriff ihrer Außenverzahnung in die Innenverzahnung der Nabe und ihrer Innenverzahnung in die Außenverzahnung des Lenksäulen-Endabschnittes eingeschoben werden kann. Dann wird die Mutter auf den Gewindeabschnitt der Lenksäule aufgeschraubt und die Lenkradnabe in üblicher Weise gegen einen Anschlag der Lenksäule gedrückt. Um ein Klappern der Hülse bzw. um Doppelpassungen zu vermeiden, kann zwischen der Hülse und einer Schulter der Lenksäule ein Elastomerring eingesetzt werden.

Um das Herausziehen der Hülse z.B. bei falscher Einstellung des Lenkrades zu erleichtern, können in der außenliegenden Stirnfläche der Hülse Mittel zum Angreifen eines Werkzeuges vorgesehen werden.

Ein Ausführungsbeispiel der Erfindung wird im folgenden unter Bezugnahme auf die Zeichnungen beschrieben. Es zeigt:

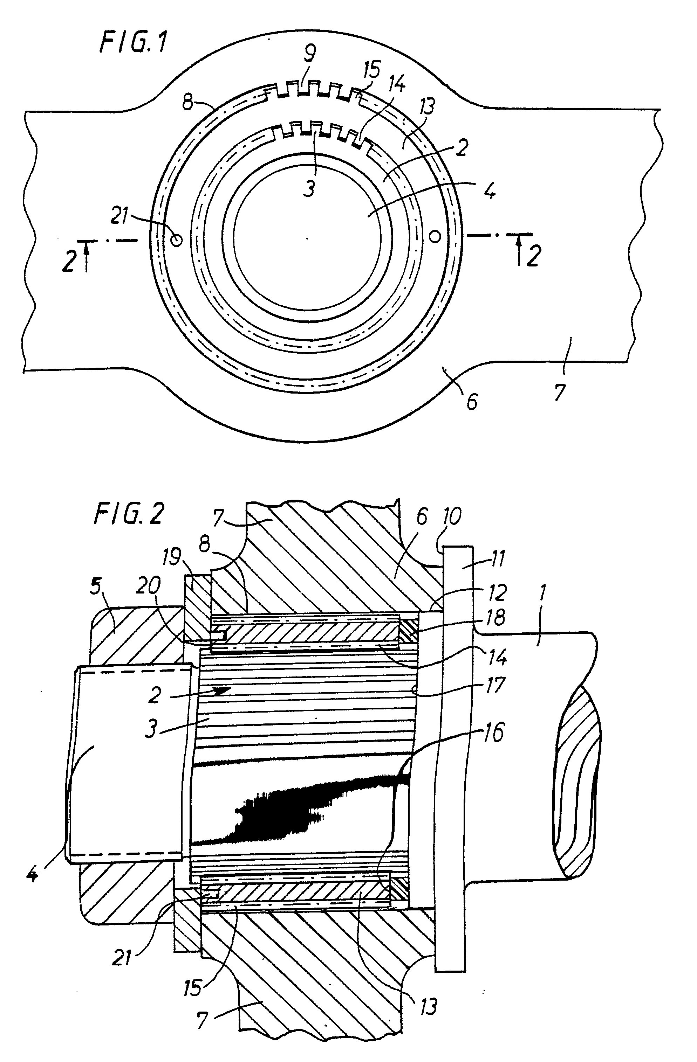

Fig. 1 eine Draufsicht einer auf eine Lenksäule aufgesetzten Lenkradnabe, wobei die Befestigungsmutter weggelassen ist, und

Fig. 2 einen Schnitt entlang Linie 2-2 in Fig. 1, jedoch mit aufgeschraubter Mutter.

Die Lenksäule 1 weist einen Endabschnitt 2 mit einem zahnartigen Längsprofil (3), beispielsweise ein Keilwellenprofil auf, an den sich ein Gewindeabschnitt 4 zum Aufschrauben einer Mutter 5 anschließt. Die Nabe 6 des Lenkrades, von dem nur zwei Speichen 7 dargestellt sind, weist eine zentrale Bohrung 8 auf, die mit einer Längsverzahnung 9 versehen ist. Die Nabe 6 liegt im aufgeschobenem Zustand in axialer Richtung an einer Schulter 10 eines mit der Lenksäule 1 verbundenen Flansches 11 an und ist mit ihrer Bohrung 8 auf einer zylindrischen Fläche 12 des Flansches 11 zentriert.

Zwischen dem zentralen Endabschnitt 2 der Lenksäule 1 und der Bohrung 8 der Nabe 6 ist eine Hülse 13 eingesetzt, die eine in die Verzahnung 3 des Endabschnittes 2 eingreifende Innenverzahnung 14 und eine in die Verzahnung 9 der Nabe 6 eingreifende Außenverzahnung 15 aufweist. Die Zähnezahl der Verzahnung 3, 14 zwischen der Hülse 13 und dem Endabschnitt weicht von der Zähnezahl der Verzahnung 9, 15 zwischen der Hülse 13 und der Nabe 6 ab. Dadurch läßt sich die Nabe 6 genau in einer gewünschten Position relativ zur Lenksäule 1 fixieren. Die Einstellung ist um so feiner, je geringer die Differenz der Anzahl der Zähne ist. Zum Ausgleich von Toleranzen ist zwischen dem Ende 16 der Hülse 13 und der Stirnfläche 17 des Flansches 11 ein Elastomerring 18 eingesetzt.

Zur Montage des Lenkrades auf der Lenksäule 1 wird die Nabe 6 über den Endabschnitt 2 geschoben, bis sie an der Schulter 10 des Flansches 11 anliegt und dabei durch die zylindrische Fläche 12 zentriert ist. Dann wird das Lenkrad in die gewünschte Stellung gedreht und darauf die Hülse 13 zwischen der Nabe 6 und dem Endabschnitt 2 der Lenksäule 1 eingeschoben. Damit ist eine formschlüssige Verbindung zwischen der Lenksäule 1 und der Lenkradnabe 6 über die Verzahnungen 3, 14 und 9, 15 hergestellt. Dann wird die Mutter 5 unter Zwischenschaltung einer Beilagscheibe 19 aufgeschraubt und in üblicher Weise gegen Lösen gesichert.

Um ein Herausziehen der Hülse 13 bei fehlerhafter Ausrichtung zu erleichtern, sind in der Stirnfläche 20 zwei Sacklöcher 21 zum Angriff eines entsprechenden Werkzeuges vorgesehen.

**Ansprüche**

1. Anordnung zur Befestigung der Nabe (6) eines Lenkrades auf dem Endabschnitt (2) einer Lenksäule (1), der mit einem zahnartigen Längsprofil (3) versehen ist, sowie mit einem daran anschließenden Gewindeabschnitt (4) zum Aufschrauben einer Mutter (5), die das Abziehen der Nabe (6) von dem Endabschnitt (2) verhindert, mit einer Hülse (13) zwischen der Nabe (6) und dem Endabschnitt (2), die ein in das Längsprofil (3) formschlüssig eingreifende innere Längsverzahnung (14) aufweist und mit ihrer äußeren Umfangsfläche formschlüssig mit der Nabe (6) zusammenwirkt, **dadurch gekennzeichnet,**
daß die formschlüssige Verbindung zwischen der Hülse(13) und der Nabe (6) von einer Längsverzahnung (9, 15) gebildet ist, deren Zähnezahl von der Zähnezahl der Längsverzahnung (3, 14) zwischen der Hülse (13) und dem Endabschnitt (2) der Lenksäule (1) abweicht.

2. Anordnung nach Anspruch 1, dadurch gekennzeichnet, daß die Lenksäule (1) am Übergang zu dem Endabschnitt (2) mit dem Längsprofil (3) eine zylindrische Zentrierfläche (12) für die Nabe (6) aufweist.

3. Anordnung nach Anspruch 2, dadurch gekennzeichnet, daß zwischen der Hülse (13) und der von der Zentrierfläche gebildeten Schulter (17) ein Elastomerring (18) eingesetzt ist.

4. Anordnung nach Anspruch 1, dadurch gekennzeichnet, daß die Hülse (13) in ihrer freien Stirnfläche (20) Mittel (21) zum Angreifen eines Werkzeuges aufweist.

FIG.1

FIG.2